# EUROPÄISCHE PATENTSCHRIFT

(11) **EP 2 870 903 B1**
(45) Veröffentlichungstag und Bekanntmachung des Hinweises auf die Patenterteilung: **23.11.2016**
(21) Anmeldenummer: 14188648.1
(22) Anmeldetag: 13.10.2014
(51) Int. Cl.: A47J 47/16, A47J 43/07

(54) **Standfuß einer Tisch-Küchenmaschine**
Stand of a table kitchen appliance
Pied de support d'un robot ménager de table

(30) Priorität: 06.11.2013 DE 102013112181
(43) Veröffentlichungstag der Anmeldung: 13.05.2015
(73) Patentinhaber: Vorwerk & Co. Interholding GmbH, 42275 Wuppertal (DE)
(72) Erfinder: Cornelißen, Markus, 53332 Bornheim (DE)
(74) Vertreter: Müller, Enno

(56) Entgegenhaltungen:
- DE-A1-102011 000 631
- US-A1- 2005 023 233

## Beschreibung

Die Erfindung betrifft eine Tisch-Küchenmaschine mit einem Standfuß, wobei die Küchenmaschine ein Gehäuse mit einem bei üblicher Aufstellung nach unten abragenden Fortsatz oder Gehäuseabschnitt aufweist, der auf einem eine Standfläche ausbildenden Standteil mittels eines (ersten) Weichteils aufsitzt.

Standfüße, insbesondere für Küchenmaschinen, sind bekannt. Diese sind zur Abstützung des Geräts, auf einer Fläche, insbesondere auf einer Tischfläche, ausgelegt, wobei weiter bevorzugt über den Standfuß in dem Gerät hervorgerufene Schwingungen gedämpft werden. Derartige Schwingungen treten insbesondere bei Küchenmaschinen auf, welche ein Rührgefäß mit einem Rührwerk aufweisen, welches Rührwerk elektromotorisch angetrieben wird. Über den Standfuß soll die Übertragung des Körperschalls über die Standfläche zumindest weitestgehend unterbunden werden. Darüber hinaus soll es nicht zu Versetzungen oder gar Sprüngen des Gerätes relativ zu der Fläche kommen.

In diesem Zusammenhang sind Standfüße bekannt, welche zum Aufsetzen auf der Fläche, bspw. Tischfläche, ausgebildete Standteile aufweisen. Die Abstützung auf dem Standteil erfolgt über ein Weichteil, welches zur Dämpfung von Schwingungen dient. Auf das Weichteil wirkt die Küchenmaschine, unmittelbar mit einem Gehäuseabschnitt, bspw. Bodenabschnitt oder alternativ über einen nach unten, bevorzugt über eine Bodenebene hinausragenden Fortsatz.

Eine aus der DE 10 2011000 631 A1 bekannte Küchenmaschine sitzt auf einer schalldämpfenden Unterlage auf, die aus einem unterseitig und teilweise oberseitig mit einer Folie überdecktem Schaumstoff besteht.

Im Hinblick auf den bekannten Stand der Technik beschäftigt sich die Erfindung mit der Aufgabenstellung, eine Tisch-Küchenmaschine hinsichtlich der Standsicherheit der Küchenmaschine auf der Abstellfläche günstig auszubilden.

Diese Aufgabe ist bei einer Tisch-Küchenmaschine gelöst, bei welcher darauf abgestellt ist, dass das Standteil aus einem gummiartigen Weichmaterial besteht, dass das unmittelbar mit dem Standteil verbundene Weichteil aus einem Schaumstoff, bspw. PUR-Schaumstoff, besteht, und dass eine in Richtung einer von dem Standfuß aufgenommenen Gewichtskraft gemessene Dicke des Weichmaterials dem Zwei- oder Mehrfachen bis hin zu einem Zwanzigfachen der Dicke des Standteiles entspricht. Das Standteil ist bevorzugt zumindest im Bereich dessen Standfläche gummiartig ausgebildet, was weiter insbesondere einem Versetzen bzw. Verschieben der Küchenmaschine mit dessen Standfüßen relativ zur Abstellfläche, bspw. Tischfläche, entgegen wirkt.

Das aus einem Weichmaterial bestehende Standteil ist weiter bevorzugt unmittelbar mit dem Weichteil verbunden, bspw. mit diesem verklebt oder verschweißt. Das Weichteil ist bevorzugt ein Schaumstoff, weiter insbesondere ein Polyuretan-Schaumstoff. Entsprechend weist das Weichteil gute Dämpfungseigenschaften insbesondere hinsichtlich über den Fortsatz oder den Gehäuseabschnitt aus der Küchenmaschine heraus auf den Standfuß übertragene Stöße.

Mit Bezug auf die Richtung der auf den Standfuß, insbesondere auf das Standteil einwirkenden Gewichtskraft der Küchenmaschine, weiter mit Bezug auf eine senkrecht zur Standfläche des Standteiles betrachtete Richtung, weist das Weichteil eine Dicke auf, die eine ausreichende Dämpfung von insbesondere vertikal eingeleiteten Stößen bietet, sowie quer zur Dickenrichtung des Weichteils betrachtete Horizontaldeformationen erlaubt. Das an dem Weichteil unmittelbar befestigte gummiartige Standteil verhindert hierbei, dass das Weichteil durch Reibung zur Aufstellfläche der Küchenmaschine, bspw. bei einem Verschieben des Gerätes, beschädigt wird.

Die Dicke des Weichteils entspricht bevorzugt dem Zwei- bis Zwanzigfachen der Dicke des Standteiles, weiter bevorzugt dem Sechs- bis Zwölffachen. Weiter bevorzugt kommt ein Weichteil zum Einsatz mit einer Dicke von bevorzugt mehr als 5 mm, weiter bevorzugt mehr als 6 mm bis hin zu 30 mm.

Weiter bevorzugt ist das Standteil ein Elastomerteil, entsprechend bevorzugt ein formfestes, jedoch elastisch verformbares Weichkunststoffteil, welches Rückstelleigenschaften aufweist.

In weiter bevorzugter Ausgestaltung ist der Fortsatz oder Gehäuseabschnitt der Küchenmaschine mit dem ersten Weichteil unmittelbar verbunden. So ist diesbezüglich bevorzugt eine Klebeverbindung oder eine Schweißverbindung. Auch ist in diesem Zusammenhang bevorzugt, den Gehäuseabschnitt zugewandt dem ersten Weichteil als Flächenteil auszugestalten, wobei weiter bevorzugt eine unmittelbare Verbindung zwischen Gehäuseabschnitt und Weichteil über diese Fläche erfolgt. Es ergibt sich in bevorzugter Ausgestaltung eine sandwichartige Ausformung des Standfußes, mit in Richtung der von dem Standfuß aufgenommenen Gewichtskraft betrachtete Anordnung von Gehäuseabschnitt, Weichteil und Standteil.

In alternativer Ausgestaltung ist ein zweites Weichteil vorgesehen, das in einem nach oben offenen Schalenabschnitt aufgenommen ist, wobei der Fortsatz oder Gehäuseabschnitt auf dem zweiten Weichteil aufsitzt. Der nach oben offene Schalenabschnitt bildet insbesondere eine bevorzugt umlaufende Begrenzung eines durch den Schalenabschnitt gegebenen Ausweichraumes für das zweite Weichteil. Dieses Weichteil kann bei Bewegungen des Fortsatzes oder des Gehäuseabschnittes relativ zu dem Standteil im Überdeckungsbereich zu dem Fortsatz oder Gehäuseabschnitt zwischen dem Fortsatz oder Gehäuseabschnitt und der Wand des Schalenabschnittes komprimiert werden.

Das zweite Weichteil ist hierbei bevorzugt unverlierbar in dem Schalenabschnitt angeordnet.

Weiter bevorzugt ist das zweite Weichteil hinsichtlich seiner Shorehärte so eingestellt, dass der geräteseitige Fortsatz oder Gehäuseabschnitt bei üblichem Maximalgewicht der Küchenmaschine das Weichteil nicht derart komprimiert, dass sich ein gleichsam starrer Übergang ergibt. Vielmehr ist die Härte so gewählt, dass auch dann immer noch sich ein elastisches Einfedern einstellen kann.

Bevorzugt ist weiter der Fortsatz oder Gehäuseabschnitt selbst gegenüber insbesondere dem zweiten Weichteil härter ausgebildet, insbesondere durch Ausbildung des Fortsatzes oder Gehäuseabschnittes aus Hartkunststoff oder Metall.

Der Schalenabschnitt sitzt in bevorzugter Ausgestaltung auf dem ersten Weichteil auf. Der Schalenabschnitt, insbesondere dessen Bodenabschnitt ist entsprechend sandwichartig gefasst zwischen dem zweiten und dem ersten Weichteil.

Bevorzugt ist das zweite Weichteil kreisringförmig ausgebildet, was eine günstige Deformation des zweiten Weichteiles, insbesondere quer zu einer Gewichtskraft-Richtung und die entsprechende Rückstellfähigkeit unterstützt.

Das erste Weichteil und/oder das Standteil sind in bevorzugter Ausgestaltung kreisscheibenförmig ausgebildet. Auch sind diesbezüglich andere, bevorzugt durchgehend plattenförmige Ausgestaltungen von ersten Weichteil und Standteil möglich, so bspw. einen mehreckigen Grundriss aufweisend. Insbesondere bei kreisscheibenförmiger Ausgestaltung des ersten Weichteils und/oder des Standteils ist ein Außendurchmesser gewählt, der dem Außendurchmesser des gegebenenfalls auf dem ersten Weichteil aufsitzenden Schalenabschnittes entspricht.

Bezüglich des einen oder beider Weichteile handelt es sich bevorzugt um einen offenporigen oder geschlossenporigen Schaumstoff, wobei geschlossenporiger Schaumstoff insbesondere im Zusammenhang bei einer Küchenmaschine Vorzüge aufweist.

Von Bedeutung ist auch, dass das eine oder beide Weichteile bevorzugt insgesamt, insbesondere in den ggf. durch den Fortsatz oder den Gehäuseabschnitt beaufschlagten Bereich, weicher eingestellt ist als das bevorzugt aus einem gummiartigen Weichmaterial bestehende Standteil. Das oder die Weichteile weisen entsprechend eine geringere Shorehärte auf als das Standteil.

Bevorzugt ist das Material des einen oder beider Weichteile und die Überdeckung des Fortsatzes bzw. Gehäuseabschnittes zu einem der Weichteile so gewählt bzw. eingestellt, dass sich bei einer Verschiebung von einem Millimeter bezüglich aller auf einer Unterlage aufstehenden Standfüße der Küchenmaschine (bevorzugt: vier Standfüße) eine Rückstellkraft von 5 N oder mehr bis hin zu bevorzugt 15 N, weiter bevorzugt etwa 10 N einstellt.

Zudem ist diesbezüglich bevorzugt, dass mit zunehmender Horizontalverschiebung der in Überdeckung zu den Weichteilen oder dem einen Weichteil liegenden Fortsätzen bzw. Gehäuseabschnitten die Rückstellkraft insbesondere des einen oder der mehreren Weichteile (jeweils) überproportional zunimmt. So stellt sich bevorzugt bei einer Verdopplung der Horizontalverschiebung von einem Millimeter auf 2 mm eine Rückstellkraft ein, die dem 2,1- bis 3-fachen, weiter bevorzugt etwa dem 2,5-fachen des Rückstellwertes bei einem Millimeter entspricht. Bevorzugt ergibt sich bei einer Horizontalverschiebung von 2 mm eine Rückstellkraft des einen oder der beiden Weichteile von etwa 25 N. Entsprechend ist eine nicht-lineare Zunahme der Rückstellkraft vorgesehen.

Ein Weichteil kann, wie angesprochen, aus einem Schaumstoff bestehen. Es kann hierbei nicht nur aus einem offenporigen oder geschlossenporigen, sondern auch aus einem gemischt-porigen Schaumstoff bestehen. Bevorzugt ist ein Polyurethan-Schaum, weiter bevorzugt ein gemischtzelliger Polyurethan-Schaumstoff mit teilweise geschlossenen und teilweise offenen Poren.

Bevorzugt weist ein Weichteil eine Zugfestigkeit (Minimalwert nach DIN 53571) von 0,5 bis 1,5 N/mm², weiter bevorzugt 0,56 bis 1,3 N/mm² auf. In bevorzugter Ausgestaltung ist eine Zugfestigkeit von 0,78 N/mm² vorgesehen.

Weiter bevorzugt ist ein Weichteil so eingestellt, dass ich in Anlehnung an die EN 826 ein statistisches Elastizitätsmodul von 0,05 bis 1,3 N/mm² einstellt, weiter bevorzugt 0,14 bis 0,75 N/mm². Zudem ist ein dynamisches Elastizitätsmodul nach DIN 53513 von 0,3 bis 1,8 N/mm², weiter bevorzugt 0,6 bis 1,3 N/mm² vorgesehen.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, ggf. also auch dimensionslos, insbesondere 1,01-fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Darstellung eine Tisch-Küchenmaschine mit Standfüßen zum Aufstellen der Küchenmaschine auf einer Tischfläche;
- Fig. 2: eine perspektivische, teilweise aufgebrochene Darstellung eines Bo-denbereiches der Küchenmaschine mit einem Standfuß in einer ersten Ausführungsform;
- Fig. 3: den Schnitt gemäß der Linie III-III in Fig. 2, eine im Wesentlichen unbelastete Grundstellung des Standfußes betreffend;
- Fig. 4: eine der Fig. 3 entsprechende Darstellung, eine zweite Ausführungsform des Standfußes betreffend.

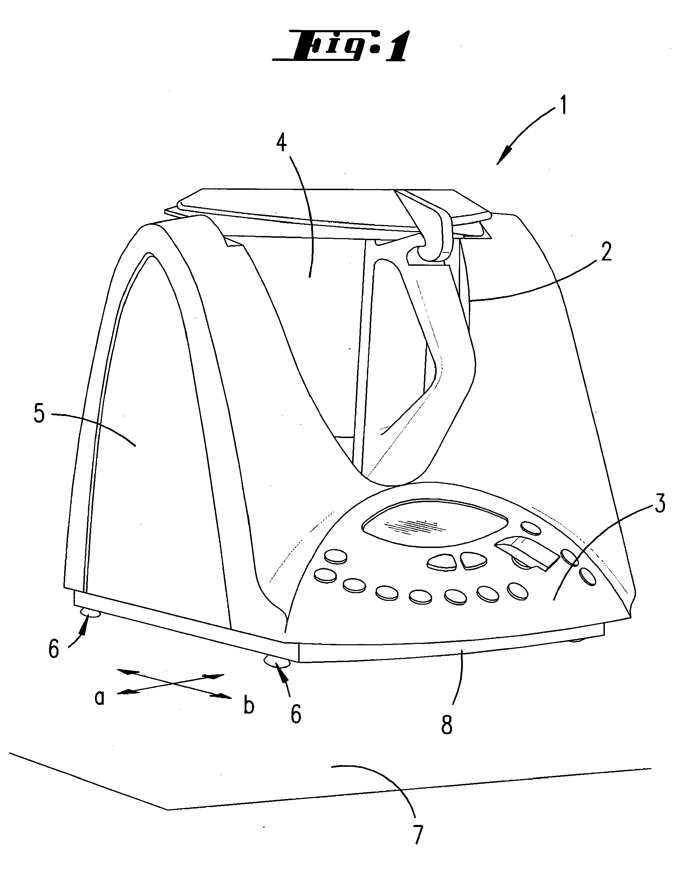

Dargestellt und beschrieben ist zunächst mit Bezug zu Fig. 1 eine Küchenmaschine 1 mit einer Rührgefäß-Aufnahme 2 und einem Bedienfeld 3.

Der Küchenmaschine 1 ist ein Rührgefäß 4 zugeordnet. Dieses sitzt in der Rührgefäß-Aufnahme 2 ein. In dem Rührgefäß 4 ist zugeordnet einem Rührgefäßboden bevorzugt ein Rührwerk vorgesehen, welches über einen in der Küchenmaschine 1 unterhalb der Aufnahme 2 angeordneten, nicht dargestellten Elektroantrieb antreibbar ist.

Das Gehäuse 5 der Küchenmaschine 1 stützt sich über Standfüße 6 auf einer Fläche, hier einer Tischfläche 7, ab. Die Standfüße 6 sind hierzu unterseitig eines Gehäusebodens 8 befestigt.

Die Küchenmaschine 1 ist unter anderem geeignet zur Herstellung von Teigen. In einem solchen Teigmodus wird mit dem sich drehenden Rührwerk durch die Zähigkeit des Teiges ein hoher Widerstand entgegengesetzt. Das erforderliche Antriebsmoment des Motors wird, natürlich bei sonstigem Motorbetrieb auch, über das Gehäuse 5 und die Standfüße 6 abgestützt. Ist die Teigkugel ungünstig im Rührgefäß 4 angeordnet, bleibt das Rührwerk ggf. kurzzeitig im Teig stecken. Zufolge dessen wird das Drehmoment kurzzeitig erhöht. Auch ein solcher Momentenstoß wird von den Standfüßen 6 kompensiert, so dass sich das Gerät nicht ruckartig und sprunghaft um seinen Schwerpunkt dreht. Darüber hinaus werden über die Standfüße 6 Vibrationen bzw. insbesondere vertikale Stöße in Richtung auf die Tischfläche 7 kompensiert.

Die Bewegung des Gehäuses 5 in horizontaler Richtung (vgl. Pfeile a und b in Fig. 1) wird zugelassen. Das Gehäuse 5 kann sich relativ zu den Standfüßen 6 bzw., wie nachstehend näher erläutert, relativ zu einem Teilabschnitt der Standfüße 6 in der horizontalen Ebene bewegen. Die gegebenenfalls sprungartig eingeleitete Energie wird in Reibung und/ oder Rückstell- und Verformungsenergie umgewandelt. Die Standfüße 6 sind hierbei bevorzugt auf der Standfläche - hier der Tischfläche 7 - nur aufsitzend und durch Reibschluss an einer Bewegung relativ zu der Standfläche gehindert. Darüber hinaus sind durch die Ausgestaltung der Standfüße 6 zudem auch relative Vertikalbewegungen des sich über die Standfüße 6 abstützenden Gehäuses 5, insbesondere relativ zu einem Teilabschnitt der Standfüße 6 gegeben.

Jeder Standfuß 6 ist im Wesentlichen zweiteilig gestaltet, wobei ein Teil gehäusefest vorgesehen ist. Bei diesem gehäusefesten Teil handelt es sich bevorzugt um einen Fortsatz 9 oder einen Gehäuseabschnitt 10, der gehäuseseitig, insbesondere gehäusebodenseitig, aus- oder angeformt ist. Im Falle eines Fortsatzes 9 ragt dieser bevorzugt nach vertikal unten über die nach unten gerichtete Gehäusebodenfläche frei ab. In alternativer Ausgestaltung ist der Fortsatz 9 bevorzugt oberhalb des Gehäusebodens 8 mit einem Wiegebalken einer Wägevorrichtung bevorzugt starr verbunden, welcher Wiegebalken anderenends wiederum an dem Gehäuse, insbesondere gehäusebodenseitig angreift.

Der Fortsatz 9 bzw. der Gehäuseabschnitt 10 ist als Starrteil ausgebildet, weiter bevorzugt zufolge einstückiger, materialeinheitlicher Ausgestaltung zusammen mit dem Gehäuseboden 8. Entsprechend kann es sich bei dem Fortsatz 9 oder dem Gehäuseabschnitt 10 um einen Hartkunststoff- oder Metallkörper handeln, der weiter bevorzugt mit Bezug auf eine zentral den Fortsatz 9 bzw. den Gehäuseabschnitt 10 durchsetzende Vertikalachse x rotationssymmetrisch ausgebildet ist. Neben der einstückigen Ausgestaltung ist weiter alternativ ein Fortsatz 9 oder Gehäuseabschnitt 10 vorgesehen, der unterseitig am Gehäuseboden 8 festlegbar, bspw. einschraubbar ist.

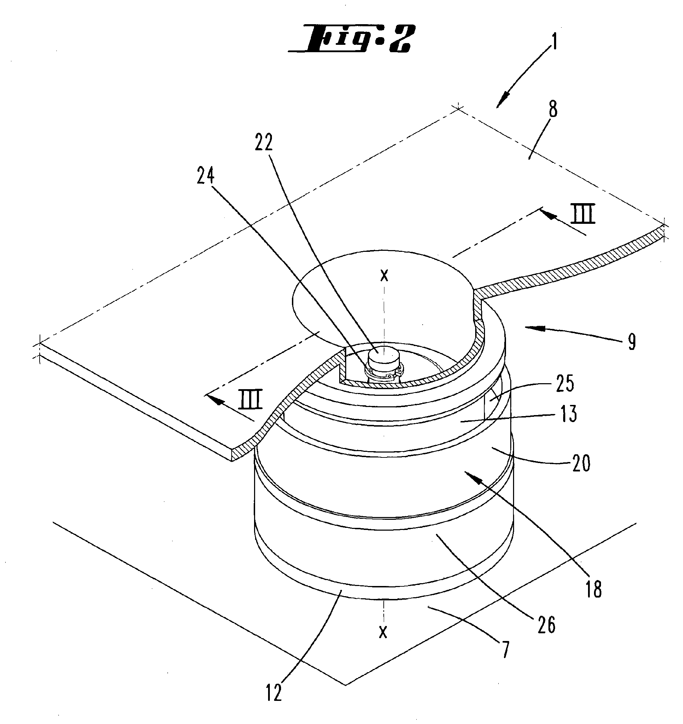

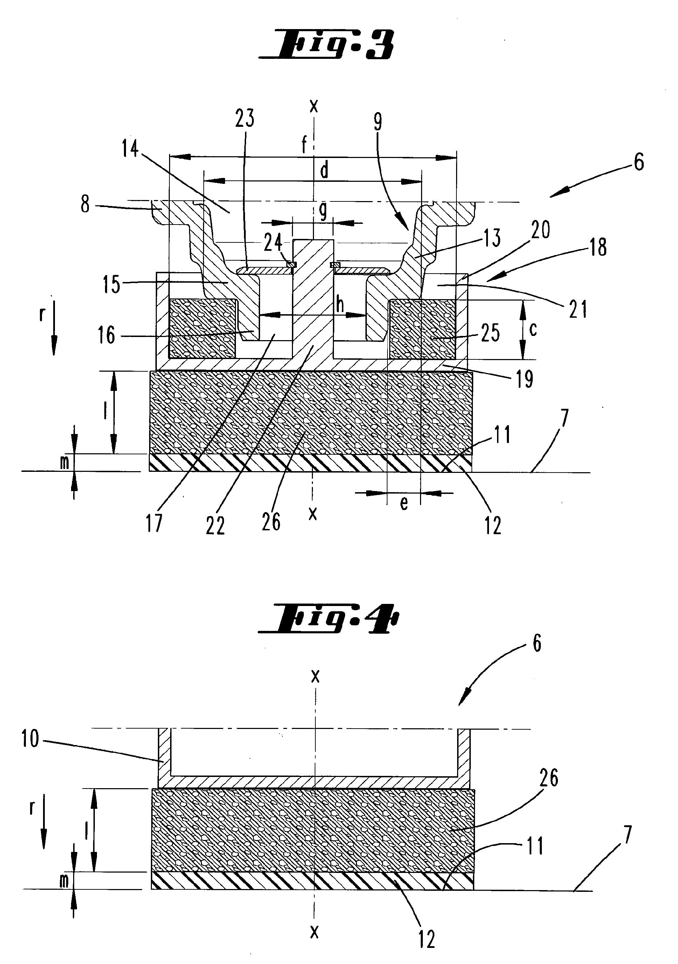

In dem insbesondere in den Figuren 2 und 3 dargestellten ersten Ausführungsbeispielen sitzt der gehäuseseitige Fortsatz 9 im Wesentlichen auf einem, eine Standfläche 11 ausbildenden Standteil 12 auf.

Der Fortsatz 9 ist im Wesentlichen als rotationssymmetrischer Hohlkörper gebildet, mit einer umlaufenden Fortsatzwandung 13. In die durch die Fortsatzwandung 13 umfasste Röhrenöffnung 14 ist mit vertikalem Abstand zur nach vertikal unten freien Randkante der Fortsatzwandung 13 ein Boden 15 einstückig und bevorzugt materialeinheitlich mit der Fortsatzwandung 13 eingezogen.

An dem Boden 15 ist unterseitig, entsprechend nach vertikal unten gerichtet, eine konzentrisch zur Vertikalachse x angeordneter Röhrenabschnitt 16 angeformt, dessen nach vertikel unten weisende Stirnfläche über die durch die nach unten weisende freie Randkante der Fortsatzwandung 13 definierte Horizontalebene hinausragt. Der vertikale Abstand c zwischen der sich in einer Horizontalebene erstreckenden Stirnfläche des Röhrenabschnittes 16 und der Stirnrandkante der Fortsatzwandung 13 entspricht bevorzugt einem Halben bis einem Zehntel, weiter bevorzugt etwa einem Drittel des Außendurchmessers d der Fortsatzwandung 12.

Das freie radiale Abstandsmaß e zwischen der Wandungsaußenseite des Röhrenabschnittes 16 und der Wandungsaußenseite der Fortsatzwandung 13 entspricht weiter bevorzugt etwa einem Halben bis einem Zehntel, weiter bevorzugt etwa einem Siebtel des Fortsatzwandungs-Außendurchmessers d.

Der Röhrenabschnitt 16 ist zentral durchsetzt von einem kreiszylinderförmigen Durchbruch 20, welcher zugleich auch den Boden 15 durchsetzt.

Weiter ist bevorzugt gemäß der ersten Ausführungsform ein nach vertikal oben offener Schalenabschnitt 18 vorgesehen. Dieser weist einen weiter bevorzugt kreisscheibenförmigen Schalenboden 19 und eine umlaufende Schalenwandung 20 auf. Die vertikale Höhe der Schalenwandung 20 entspricht im Wesentlichen dem vertikalen Erstreckungsmaß des Durchbruchs 17 in Fortsatz 9.

Der Innendurchmesser f des Schalenabschnitts 18 entspricht bevorzugt dem 1,1-bis 1,4-fachen des Außendurchmessers d der Fortsatzwandung 13, womit sich in einer wie in Fig. 3 dargestellten Grundausrichtung umlaufend zwischen der Fortsatzwandung 13 und der Schalenwandung 20 ein Ringspalt 21 einstellt.

Ausgehend von der schaleninnenseitigen Oberfläche des Schalenbodens 19 wächst ein bevorzugt im Querschnitt kreisscheibenförmiger Zapfen 22 aus. Dieser ist bevorzugt zentral angeordnet und einstückig, materialeinheitlich mit dem Schalenabschnitt 18 ausgeformt. Der Durchmesser g ist hierbei kleiner gewählt als der Innendurchmesser h des fortsatzseitigen Durchbruchs 17, wobei der Zapfen 22 den Durchbruch 17 durchtretend mit seiner nach vertikal oben weisenden Stirnfläche über die nach oben weisende Ebene des Fortsatzbodens 15 hinausragt. Bei konzentrischer Anordnung von Fortsatz 9 und Schalenabschnitt 18 ergibt sich zwischen dem Zapfen 22 und der Wandung des Durchbruchs 17 ein umlaufender Spalt, dessen Radialmaß bevorzugt gleich oder größer ist dem Radialmaß des Ringspaltes 21.

Der Schalenabschnitt 18 ist an dem Fortsatz 9 formschlüssig gehaltert. Hierzu ist eine Übergreifscheibe 23 vorgesehen, welche zentral durchsetzt ist von dem Zapfen 22 und bevorzugt auf der nach oben weisenden Oberfläche des Fortsatzbodens 15 aufliegt. Ein oberhalb der Übergreifscheibe 23 wandungsaußenseitig an dem Zapfen 22 vorgesehener Kragen 24, bevorzugt in Form eines Sprengringes oder dergleichen. fesselt den Schalenabschnitt 18 über die Übergreifscheibe 23 an dem Fortsatz 9, dies unter Ermöglichung einer vertikalen Beweglichkeit des Schalenabschnittes 18, relativ zu dem Fortsatz 9, ausgehend von der Darstellung in Fig. 3 nach vertikal oben.

Bodenseitig des Schalenabschnittes 18 ist ein (zweites) Weichteil 25 vorgesehen. Dieses ist bevorzugt kreisringförmig gestaltet und besteht weiter bevorzugt aus einem Weichschaumstoff. Das Weichteil 25 sitzt in dem Schalenabschnitt 18 auf dem Schalenboden 19 auf und weist bevorzugt einen an den Innendurchmesser der Schalenwandung 20 angepassten Außendurchmesser auf. Der freie Innendurchmesser des Weichteiles 25 ist weiter bevorzugt angepasst an den Außendurchmesser des fortsatzseitigen Röhrenabschnittes 16, wobei weiter bevorzugt der Kreisring-Innendurchmesser des Weichteiles 25 etwa dem 1,01- bis 1,1-fachen des Röhrenabschnitt-Außendurchmessers entspricht.

Das Weichteil 25 ist in einer bevorzugten Ausgestaltung lediglich durch Reib- oder Formschluss in dem Schalenabschnitt 18 gehalten. In alternativer Ausgestaltung ist auch eine Befestigung diesbezüglich möglich, bspw. zufolge Verklebung.

Die vertikale Höhe des Weichteiles 25 entspricht weiter bevorzugt etwa zwei Dritteln der Höhe der Schalenwandung 18, wobei weiter auch vertikale Höhen des Weichteiles 24 von bevorzugt ein Fünftel bis sieben Achtel der Schalenwandungshöhe möglich sind.

Die Anordnung ist weiter bevorzugt so gewählt, dass in einer unbelasteten Grundstellung gemäß der Darstellung in Fig. 3 der Fortsatz 9 mit der nach unten weisenden freien Stirnrandkante der Fortsatzwandung 13 bzw. mit der Unterseite des Bodens 13 radial außerhalb des Röhrenabschnittes 16 auf der nach oben weisenden ringförmigen Oberfläche des Weichteils 25 aufsitzt, während der Röhrenabschnitt 16 des Fortsatzes 9 in die Ringöffnung des Weichteiles 25 eintaucht, dies unter vertikaler Beabstandung der nach unten weisenden Röhrenabschnitt-Stirnfläche zur zugewandten Oberfläche des Schalenbodens 19. Diese Stellung ist weiter bevorzugt zudem die Teleskop-Auszugsstellung von Fortsatz 9 und Schalenabschnitt 18, in welcher Stellung sich der Zapfen 22 mit seinem Kragen 24 oberseitig auf der übergreifenden Scheibe 23 abstützt, welch' letztere wiederum bevorzugt auf der zugewandten Oberfläche des fortsatzseitigen Bodens 15 aufliegt.

Das Weichteil 25 ist hinsichtlich der Härte bevorzugt so eingestellt, dass dieses in einer Grundbelastung (unter Berücksichtigung eines maximalen Gesamtgewichts der Küchenmaschine 1 und bei nicht aktiviertem Rührwerk) bevorzugt nicht oder nur unwesentlich über die Fortsatzwandung 13 komprimiert wird.

Der Schalenabschnitt 18 sitzt weiter bevorzugt auf einem (ersten) Weichteil 26 auf. Auch hierbei handelt es sich bevorzugt um einen Weichschaumstoff, weiter insbesondere Polyurethan-Schaumstoff. Der Schalenabschnitt 18 sitzt hierbei mit der nach unten weisenden glatten Fläche des Bodens 15 auf der zugewandten Fläche des Weichteils 26 bevorzugt vollflächig auf. Weiter bevorzugt sind der Schalenabschnitt 18 und das Weichteil 26 miteinander verhaftet, so insbesondere klebeverbunden.

Das Weichteil 26 ist in einem Schnitt quer zur vertikalen Achse x bevorzugt gleichgestaltet wie der Schalenabschnitt 18, so dass hier bevorzugt eine kreisscheibenförmige Ausbildung des Weichteils 26 vorliegt. Der Durchmesser des Weichteils 26 entspricht in bevorzugter Ausgestaltung dem Außendurchmesser der Schalenwandung 20.

Die in Richtung der von dem Standfuß 6 aufgenommenen Gewichtskraft (Pfeil r) betrachtete Dicke 1 des Weichteiles 26 entspricht bevorzugt einem Halben bis einem Achtel des Weichteil-Durchmessers, weiter bevorzugt etwa einem Viertel.

Unterseitig, d.h. dem Schalenabschnitt 18 abgewandt, ist das Weichteil 26 mit einem plattenförmigen Standteil 12 versehen. Dieses Standteil 12 besteht bevorzugt aus einem gummiartigen Weichmaterial, insbesondere in Form eines Elastomerteils.

Das Standteil 12 weist bevorzugt denselben Durchmesser auf wie das Weichteil 26.

Die in Pfeilrichtung r betrachtete Dicke m des Standteiles 12 ist hierbei so gewählt, dass die Dicke 1 des Weichteiles 26 dem Zwei- bis Zwanzigfachen der Dicke m des Standteiles 12 entspricht, weiter bevorzugt etwa dem Vier- bis Fünffachen.

Das Standteil 12 ist bevorzugt unmittelbar mit dem Weichteil 26 klebeverbunden.

Eine bei üblichem Betrieb der Küchenmaschine 1 in der Regel auftretende Stoßbelastung wirkt in vertikaler, als auch in horizontaler Richtung. Entsprechend ist das kreisringfömige Weichteil 25 in dem Schalenabschnitt 18 sowohl von vertikal oben durch die Fortsatzwandung 13, als auch von radial innen nach radial außen im Bereich der Weichteil-Kreisringöffnung durch den Röhrenabschnitt 16 beaufschlagt.

Der Fortsatz 9 ist insgesamt in allen stoßrelevanten Richtungen durch das Weichteil 25 gedämpft gelagert, wobei das Weichteil 25 bevorzugt so ausgelegt ist, dass dieses über die elastischen Rückstellfähigkeiten den Fortsatz 9 jeweils tendenziell in die Ausgangsposition gemäß Fig. 3 drängt. Weiter ist die Härte des Weichteiles 25 so gewählt, dass bei üblichen vertikalen Stoßbelastungen insbesondere bei ordnungsgemäßem Gebrauch der Küchenmaschine 1, d.h. weiter bei ordnungsgemäßer Maximalbefüllung des Rührgefäßes 4, die nach vertikal unten weisende freie Stirnfläche des Röhrenabschnittes 16 auch in der Maximalbelastung einen vertikalen Abstand zu der zugewandten Oberfläche des Schalenbodens 19 einhält.

Der Schalenabschnitt 18 wiederum ist insgesamt in allen stoßrelevanten Richtungen durch das Weichteil 26 gedämpft gelagert. Auch das Weichteil 26 ist bevorzugt so ausgelegt, dass dieses über die elastischen Rückstellfähigkeiten den Schalenabschnitt 18 jeweils tendenziell in die Ausgangsposition gemäß0 Fig. 3 drängt.

Durch die Anordnung insbesondere des Weichteiles 26 sowie die bevorzugte unmittelbare Befestigung des Weichteils 26 mit dem Schalenboden 19, weiter bevorzugt auch mit dem Standteil 12, ist die Standsicherheit der Küchenmaschine 1 insgesamt verbessert, wobei das gummiartige Standteil 12 verhindert, dass das Weichteil 26 durch Reibung relativ zur Tischfläche 7 bspw. beim Verschieben der Küchenmaschine 1 beschädigt wird.

Die nach unten weisende Fläche des Standteiles 12 bildet hierbei die Standfläche 10 zur Zusammenwirkung mit bspw. der Tischfläche 7.

Fig. 4 zeigt eine alternative Ausführungsform des Standfußes 6. Hier ist ein sandwichartiger Aufbau bevorzugt. Bei einer bevorzugt insgesamt rotationssymmetrischen Ausgestaltung des Standfußes 6 mit Bezug zu einer Vertikalachse x ergeben sich auch in dieser Ausführungsform ein kreisscheibenförmiges Standteil 12, welches im Bereich einer ebenen Fläche unmittelbar mit einem kreisscheibenförmigen Weichteil 26 in Form eines Schaumstoffteiles verbunden ist. Auch hier ist diesbezüglich eine Klebeverbindung bevorzugt.

Das Weichteil 26 ist mit Ihrer, dem Standteil 12 abgewandten Oberfläche unmittelbar und mit einem Gehäuseabschnitt 10 der Küchenmaschine 1 verbunden. Bevorzugt kommt hier eine Klebeverbindung zum Einsatz.

Der Gehäuseabschnitt 10 weist bevorzugt dem Weichteil 26 zugewandt eine ebene Fläche auf, insbesondere zur vollflächigen Verklebung mit dem Weichteil 26.

In bevorzugter Ausgestaltung ist der Gehäuseabschnitt 10 Teil des Gehäusebodens 8, erstreckt sich hierbei bevorzugt unterhalb einer allgemeinen nach unten weisenden Bodenebene. Gemäß dem vorbeschriebenen Ausführungsbeispiel kann sich der Gehäuseabschnitt 10 wie der Fortsatz 9 auch oberhalb der Bodenebene erstrecken und hierbei Teil bspw. eines Wiegebalkens sein.

In Pfeilrichtung r betrachtet ist eine Dicke 1 des Weichteiles 26 von mindestens 6 mm bis hin zu 30 mm bevorzugt. Bezüglich der Dickenverhältnisse von Weichteil und Standteil 12 wird auf die Ausführungen zu dem zuvor beschriebenen Ausführungsbeispiel verwiesen.

Anstelle des Standteils 12 in Form eines gummiartigen Weichmaterials ist in einer weiteren Ausführungsform der Weichschaum des Weichteiles 26 zumindest auf der, der Auflagefläche - hier Tischfläche 7 - zugewandten Seite verhautet oder alternativ mit einer entsprechenden Kunststoffhaut überzogen. Diese Haut verhindert eine Beschädigung des Schaumstoffes bei einem Verschieben des Gerätes auf der Tischfläche 7. Im Sinne der Erfindung bildet die Haut das Standteil 12 mit der Standfläche 11 aus.

**Bezugszeichenliste**

| | | | |
|---|---|---|---|
| 1 | Küchenmaschine | a | Pfeil |
| 2 | Rührgefäßaufnahme | b | Pfeil |
| 3 | Bedienfeld | c | Abstand |
| 4 | Rührgefäß | d | Durchmesser |
| 5 | Gehäuse | e | Abstandsmaß |
| 6 | Standfuß | f | Innendurchmesser |
| 7 | Tischfläche | g | Durchmesser |
| 8 | Gehäuseboden | h | Innendurchmesser |
| 9 | Fortsatz | l | Dicke |
| 10 | Gehäuseabschnitt | m | Dicke |
| 11 | Standfläche | r | Pfeil |
| 12 | Standteil | x | Vertikalachse |
| 13 | Fortsatzwandung | | |
| 14 | Röhrenöffnung | | |
| 15 | Boden | | |
| 16 | Röhrenabschnitt | | |
| 17 | Durchbruch | | |
| 18 | Schalenabschnitt | | |
| 19 | Schalenboden | | |
| 20 | Schalungswandung | | |
| 21 | Ringspalt | | |
| 22 | Zapfen | | |
| 23 | Übergreifscheibe | | |
| 24 | Kragen | | |
| 25 | Weichteil | | |
| 26 | Weichteil | | |

## Patentansprüche

1. Tisch-Küchenmaschine (1) mit einem Standfuß (6), wobei die Küchenmaschine ein Gehäuse (5) mit einem bei üblicher Aufstellung nach unten abragenden Fortsatz (9) oder Gehäuseabschnitt (10) aufweist, der auf einem eine Standfläche (11) ausbildenden Standteil (12) mittels eines (ersten) Weichteils (26) aufsitzt, **dadurch gekennzeichnet, dass** das Standteil (12) aus einem gummiartigen Weichmaterial besteht, dass das unmittelbar mit dem Standteil (12) verbundene Weichteil (26) aus einem Schaumstoff, bspw. PUR-Schaumstoff, besteht und dass eine in Richtung einer von dem Standfuß (12) aufgenommenen Gewichtskraft gemessene Dicke (l) des Weichteils (26) dem Zwei- oder Mehrfachen bis hin zu einem Zwanzigfachen der Dicke (m) des Standteils (12) entspricht.

2. Tisch-Küchenmaschine nach Anspruch 1, **dadurch gekennzeichnet, dass** das Standteil (12) ein Elastomerteil ist.

3. Tisch-Küchenmaschine nach einem der vorhergehenden Ansprüche,
**dadurch gekennzeichnet, dass** der Fortsatz (9) oder Gehäuseabschnitt (10) mit dem ersten Weichteil (26) unmittelbar verbunden ist.

4. Tisch-Küchenmaschine nach einem der vorhergehenden Ansprüche,
**dadurch gekennzeichnet, dass** ein zweites Weichteil (25) vorgesehen ist, das in einem nach oben offenen Schalenabschnitt (18) aufgenommen ist, und dass der Fortsatz (9) oder Gehäuseabschnitt (10) auf dem zweiten Weichteil (25) aufsitzt.

5. Tisch-Küchenmaschine nach Anspruch 4, **dadurch gekennzeichnet, dass** der Schalenabschnitt (18) auf dem ersten Weichteil (26) aufsitzt.

6. Tisch-Küchenmaschine nach einem der Ansprüche 4 oder 5, **dadurch gekennzeichnet, dass** das zweite Weichteil (25) kreisringförmig ausgebildet ist.

7. Tisch-Küchenmaschine nach einem der vorhergehenden Ansprüche,
**dadurch gekennzeichnet, dass** das erste Weichteil (26) und/oder das Standteil (12) kreisscheibenförmig ausgebildet ist.

## Claims

1. Tabletop kitchen appliance (1) comprising a base (6), the kitchen appliance comprising a housing (5) which comprises an extension (9) or housing portion (10) which projects downwards when installed in the usual manner and rests by means of a (first) soft part (26) on a base part (12) which forms a base surface (11), **characterised in that** the base part (12) is made of a rubber-like soft material, **in that** the soft part (26), which is directly connected to the base part (12), is made of a foam, for example PUR foam, and **in that** a thickness (I) of the soft part (26) measured in the direction of a gravitational force absorbed by the base (12) corresponds to two or more, up to twenty, times the thickness (m) of the base part (12).

2. Tabletop kitchen appliance according to claim 1, **characterised in that** the base part (12) is an elastomer part.

3. Tabletop kitchen appliance according to either of the preceding claims, **characterised in that** the extension (9) or housing portion (10) is directly connected to the first soft part (26).

4. Tabletop kitchen appliance according to any of the preceding claims, **characterised in that** a second soft part (25) is provided which is received in a shell portion (18) that is open at the top, and **in that** the extension (9) or housing portion (10) rests on the second soft part (25).

5. Tabletop kitchen appliance according to claim 4, **characterised in that** the shell portion (18) rests on the first soft part (26).

6. Tabletop kitchen appliance according to either claim 4 or claim 5, **characterised in that** the second soft part (25) is annular.

7. Tabletop kitchen appliance according to any of the preceding claims, **characterised in that** the first sort part (26) and/or the base part (12) is in the form of an annular disc.

## Revendications

1. Robot ménager de table (1) ayant un pied de support (6), dans lequel le robot ménager présente un boîtier (5) ayant une extension (9) ou une portion de boîtier (10) faisant, en position usuelle, saillie vers le bas, laquelle prend appui sur une pièce de support (12) formant une surface d'appui (11) par le biais d'une (première) pièce souple (26), **caractérisé en ce que** la pièce de support (12) est réalisée dans un matériau souple façon caoutchouc, **en ce que** la pièce souple (26) qui est liée directement avec la pièce de support (12), est fait d'une mousse, par exemple une mousse de polyuréthane et **en ce qu'**une épaisseur (1) de la pièce souple (26), mesurée en direction d'un poids supporté par le pied de support (12), correspond à deux ou plusieurs fois jusqu'à vingt fois l'épaisseur (m) de la pièce de support (12).

2. Robot ménager de table selon la revendication 1, **caractérisé en ce que** la pièce de support (12) est une pièce en élastomère.

3. Robot ménager de table selon l'une des revendications précédentes, **caractérisé en ce que** l'extension (9) ou la portion de boîtier (10) est liée directement avec la première pièce souple (26).

4. Robot ménager de table selon l'une des revendications précédentes, **caractérisé en ce qu'**une deuxième pièce souple est prévue (25) laquelle est reçue dans une portion d'enveloppe (18) ouverte vers le haut et **en ce que** l'extension (9) ou portion de boîtier (10) prend appui sur la deuxième partie souple (25).

5. Robot ménager de table selon la revendication 4, **caractérisé en ce que** la portion d'enveloppe (18) prend appui sur la première pièce souple (26).

6. Robot ménager de table selon la revendication 4 ou 5, **caractérisé en ce que** la deuxième pièce souple (25) a une forme annulaire.

7. Robot ménager de table selon l'une des revendications précédentes, **caractérisé en ce que** la première pièce souple (26) et/ou la pièce de support (12) ont une forme de disque circulaire.
